# EUROPÄISCHE PATENTANMELDUNG

(11) **EP 2 148 407 A1**
(43) Veröffentlichungstag der Anmeldung: **27.01.2010**
(21) Anmeldenummer: 09009264.4
(22) Anmeldetag: 16.07.2009
(51) Int. Cl.: H02K 1/27, H02K 7/12

(54) **Permanenterregte Synchronmaschine**

(30) Priorität: 25.07.2008 DE 102008034975
(71) Anmelder: Voith Patent GmbH, 89522 Heidenheim (DE)
(72) Erfinder: Lange, Andreas, Dr., 89551 Zang (DE); Verde, Joana, 89522 Heidenheim (DE); Mühlberger, Uwe, 89522 Heidenheim (DE); Woehl-Bruhn, Henning, 38118 Braunschweig (DE); Canders, Wolf-Rüdiger, 37520 Osterode am Harz (DE)
(74) Vertreter: Weitzel, Wolfgang

(57) **Zusammenfassung**

Eine permanenterregte Synchronmaschine weist einen Rotor (2) und einen Stator (1) auf, wobei im Stator (1) Wicklungen (3) und im Rotor (2) vergrabene Permanentmagnete (5) vorgesehen sind. Erfindungsgemäß ist im Bereich der Permanentmagnete (5) ein mit diesen korrespondierendes Element (6) angeordnet, welches hartmagnetisches Material aufweist, und welches um eine Achse senkrecht zu seinen magnetischen Feldlinien beweglich ausgebildet ist. Durch Drehen des beweglichen Elements wird so eine Schwächung oder Verstärkung des Magnetfelds der Permanentmagneten (5) in dem Rotor (2) möglich.

## Beschreibung

Die Erfindung betrifft eine Permanenterregte Synchronmaschine mit einem Rotor und einem Stator, wobei der Stator Wicklungen aufweist, und wobei der Rotor vergrabene Permanentmagnete aufweist.

Aus dem allgemeinen Stand der Technik sind solche permanenterregte Synchronmaschinen mit so genannten vergrabenen Magneten bekannt. Die beispielsweise im Rotor befindlichen Permanentmagnete sind hierbei in Richtung des Luftspalts bzw. der Statorwicklungen von einer Schicht aus Weicheisen - typischerweise in axialer Richtung geblechtem Trafoeisen - bedeckt. Die dadurch erhöhte Statorinduktivität wirkt sich günstig auf den Betrieb in der Feldschwächung aus. Der typische Vorteil solcher Maschinen liegt darin, dass hohe Ströme in den Statorwicklungen möglich sind, ohne dass das hierbei entstehende Magnetfeld die Permanentmagneten schädigen kann. Durch die so erreichte hohe Drehmoment-überlastfähigkeit wird es möglich, das Erregerfeld relativ schwach auszulegen und somit die Verluste in Teillast bei hohen Drehzahlen gering zu halten.

Nun ist es allerdings so, dass in bestimmten Aufgabenstellungen vergleichsweise starke Motoren benötigt werden, die jedoch in sehr geringer Teillast oder im Leerlauf minimale Verluste haben sollten.

Eine der bekannten Lösungen hierfür ist es, die elektrische Maschine über ein Kupplungselement in diesen Situationen aus dem Antriebsstrang herauszunehmen. Dies weist jedoch den Nachteil auf, dass mit der Kupplung ein zusätzliches Element benötigt wird, welches sowohl Bauraum als auch Gewicht als auch eine gezielte Ansteuerung benötigt. Außerdem kann dann kein Mitlaufen der elektrischen Maschine in den Betriebphasen stattfinden, in denen diese weder zur Beschleunigung noch zur Abbremsung in dem Betriebsstrang benötigt wird. Die Maschine kann somit keine Lichtmaschinenfunktion erfüllen, so dass neben der Kupplung eine zusätzliche Lichtmaschine vonnöten ist, welche wiederum Bauraum benötigt und einen entsprechenden Steuerungs- und Anschlussaufwand auslöst.

Es ist nun die Aufgabe der Erfindung eine permanenterregte Synchronmaschine mit einem Rotor und einem Stator bereitzustellen, welche die oben genannten Nachteile vermeidet, und welche insbesondere auch für den Einsatz in einem Antriebsstrang gemäß der oben beschriebenen Art gut geeignet ist.

Erfindungsgemäß wird diese Aufgabe durch eine permanenterregte Synchronmaschine gelöst, bei der im Bereich der Permanentmagnete mit diesen korrespondierende Elemente angeordnet sind, welche magnetisches Material aufweisen, und welche um eine Achse senkrecht zur Ebene, in der die magnetischen Feldlinien verlaufen, beweglich ausgebildet sind.

In diesem Aufbau ist eine hoch ausgenutzte permanenterregte Synchronmaschinentopologie möglich, die aufgrund der vergrabenen Magnete eine gute Drehmomentdichte und eine hohe Feldschwächfähigkeit aufweist. Zudem lassen die erfindungsgemäßen beweglichen Elemente eine Stellbarkeit des Erregerfeldes im Rotor zu. Durch die Bewegung der Elemente kann nämlich erreicht werden, dass das Feld der im Rotor vergrabenen Permanentmagnete entweder unterstützt oder geschwächt wird, je nachdem ob die Elemente so ausgerichtet sind, dass sich ihre Feldlinien zu denen der Permanentmagneten addieren oder sich von diesen subtrahieren. Aufgrund der vektoriellen Addition der Feldlinien kann durch einen entsprechenden Winkel zwischen den Feldlinien des starren Permanentmagneten und denen des beweglichen Elements eine stufenlose Beeinflussung der Feldstärke zur Schwächung oder Unterstützung des Feldes der starren Permanentmagneten erreicht werden.

Die Permanentmagnete sind dabei als vergrabene Permanentmagnete ausgeführt und komplett von einer Polkappe überdeckt. Dieser Aufbau ermöglicht es bei jeglicher Einstellung eine Vergleichmäßigung des magnetischen Flusses zu erzielen.

Die Überdeckung der einzelnen Permanentmagnete und der zwischen den Permanentmagneten liegende Bereich ist dabei insbesondere frei von Schlitzen oder Luftspalten im Bereich des Rotors. Wären solche Schlitze oder Luftspalte im Bereich des Rotors zwischen den Permanentmagneten vorhanden, wie sie im Stand der Technik auch üblich sind, dann würde es zu einer starken Einsattelung des Erregerfelds mit einer sehr geringen bis verschwindenden Flussdichte in der Polmitte kommen. Damit wäre die angestrebte Vergleichmäßigung unabhängig von der Position der erfindungsgemäßen Elemente nicht oder nur schwer zu erzielen.

Der große Vorteil ist dabei es, dass ein weiterer Feldschwächbereich erschlossen wird, welcher ohne feldschwächende Statorströme realisiert werden kann, da eine einfache Bewegung des beweglichen Elements ausreicht, um die magnetischen Eigenschaften des Rotors zu verstärken oder zu schwächen.

Gemäß einer besonders günstigen Ausgestaltung der Erfindung sind die Elemente dabei rund und drehbeweglich um ihre eigene Achse ausgebildet.

Diese runde Kontur ermöglicht eine einfache und sichere Beweglichkeit der Elemente.

Gemäß einer besonders günstigen Weiterbildung der Erfindung ist es außerdem vorgesehen, dass jeder der Permanentmagnete mit wenigstens einem der Elemente zusammenwirkt oder, dass alternativ hierzu die Permanentmagnete in Gruppen zusammenwirken, wobei jede der Gruppen an Permanentmagneten wenigstens eines der beweglichen Elemente aufweist.

Dadurch, dass jeder Permanentmagnet bzw. jede Gruppe von Permanentmagneten mit wenigstens einem der Elemente zusammenwirken, kann jeder der Permanentmagnete bzw. jede Gruppe der Permanentmagnete hinsichtlich ihrer Feldstärke durch die beweglichen Elemente unterstützend oder schwächend beeinflusst werden. Damit wird eine optimale Beeinflussung des Magnetfeldes des gesamten Rotors ermöglicht.

In einer idealen Weiterbildung der Erfindung sind die Elemente dabei jeweils zentral im Bereich des Permanentmagneten oder der Gruppe von Permanentmagneten angeordnet.

Diese Anordnung erlaubt es eine optimale Beeinflussung jedes der Permanentmagneten oder jeder Gruppe von Permanentmagneten über das zentral angeordnete bewegliche Element zu realisieren. Grundsätzlich wären jedoch auch andere Ausführungen denkbar, wie beispielsweise die Anordnung seitlich neben den Permanentmagneten oder seitlich neben einer Gruppe von Permanentmagneten, oder auch die Anordnung von mehreren beweglichen Elementen im Bereich eines Permanentmagneten oder einer Gruppe von Permanentmagneten. Die zentrale Anordnung erlaubt jedoch die beste und gleichmäßigste Beeinflussung des Feldes mit einem vergleichsweise geringen Aufwand an Bauteilen.

Gemäß einer besonders günstigen und vorteilhaften Ausgestaltung der Erfindung ist es außerdem vorgesehen, dass die Elemente im Rotor alle mit einer Vorrichtung verbunden sind, so dass die Elemente durch einen Aktuator gemeinsam drehbar sind.

Um die Idee der Erfindung ideal auszunutzen, ist es sinnvoll, das magnetische Feld im Rotor gleichmäßig zu schwächen oder zu unterstützen. Deshalb können gemäß dieser Ausführungsform der Erfindung die beweglichen Elemente durch die Vorrichtung gleichmäßig und gleichzeitig in der gleichen Art bewegt werden.

Durch eine geeignete Vorrichtung kann so mit einem einzigen Aktuator die Beeinflussung des magnetischen Flusses im gesamten Rotor erreicht werden. Hierdurch wird der Aufwand gegenüber einer Einzelbetätigung der einzelnen beweglichen Elemente deutlich reduziert, ohne dass sich der gewünschte Effekt nachteilig verändert.

Gemäß einer weiteren Ausführungsform der Erfindung sind die benachbarten Permanentmagnete zueinander in einem von Null verschiedenen Winkel angeordnet.

Diese Winkelanordnung der einzelnen Permanentmagnete oder einer Gruppe von jeweils zwei Permanentmagneten zueinander kann dabei den magnetischen Fluss in dem Luftspalt zwischen Rotor und Stator positiv beeinflussen, da je nach Dicke des Materials unter dem die Permanentmagnete vergraben sind, die Flussdichten im Luftspalt gesteuert werden können.

Außerdem können gemäß einer besonders vorteilhaften Ausgestaltung die Permanentmagnete in mehreren verschiedenen, radialen Ebenen des Rotors angeordnet sein.

Dies dient ebenfalls zur Steuerung der Flussdichten im Luftspalt und hat den zusätzlichen Vorteil, dass durch entsprechende Dimensionierung auch der Rückschluss beeinflusst werden kann.

Die beweglichen Elemente können dabei gemäß einer bevorzugten Ausgestaltung selbst als Permanentmagnete ausgebildet sein.

Gegenüber alternativen Ausgestaltungen aus einem Trägermaterial mit eingebettetem weichmagnetischem Material ermöglicht dies eine noch höhere Feldstärke bei gleichem Volumen.

Die bevorzugte Anwendung einer permanenterregten Synchronmaschine gemäß der Erfindung liegt im Bereich von Fahrzeugen, insbesondere von schienenlosen Fahrzeugen.

Hier kann der besondere Vorteil einer hinsichtlich des effizienten Betriebsbereiches sehr flexiblen Maschine, welche bei sehr hoher Lastspreizung minimale Verluste aufweist, besonders vorteilhaft genutzt werden, insbesondere in der bevorzugten Verwendung der permanenterregten Synchronmaschine als Teil eines Antriebsstrangs, insbesondere eines Hybridantriebsstrangs mit elektrischer Maschine und Verbrennungsmotor. Dann kann die elektrische Maschine für den motorischen oder generatorischen Betrieb in dem Antriebsstrang mit großer Leistung ausgelegt werden. Bei einer reinen Betätigung des Antriebsstrangs über den Verbrennungsmotor kann die elektrische Maschine andererseits mit entsprechender Feldschwächung als Lichtmaschine eingesetzt werden, um elektrische Energie für Nebenaggregate, zum Laden einer Starterbatterie oder dergleichen zu liefern. Aufgrund der Feldschwächung über die beweglichen Elemente kann diese mit sehr geringer Verlustleistung durch feldschwächende Statorströme realisiert werden, so dass die zusätzliche Funktionalität des elektrischen Antriebsmotors als Lichtmaschine energieeffizient möglich wird. Daher kann beim Einsatz der erfindungsgemäßen Synchronmaschine auf zusätzliche Kupplungselemente und/oder eine zusätzliche Lichtmaschine gänzlich verzichtet werden, so dass ein kompakter und sehr effizienter Antriebsstrang möglich wird.

Die Erfindung wird nachfolgend anhand von zwei Ausführungsbeispielen näher erläutert, welche anhand der Figuren exemplarisch dargestellt sind. Auch hieraus ergeben sich weitere Vorteile und Ausgestaltungsvarianten der oben dargelegten Erfindung.

Dabei zeigen:
- Figur 1: einen Ausschnitt aus der permanenterregten Synchronmaschine gemäß der Erfindung in einer ersten Ausführungsform;
- Figur 2: einen Ausschnitt aus einer permanenterregten Synchronmaschine gemäß der Erfindung in einer zweiten Ausführungsform; und
- Figur 3: einen Ausschnitt aus einer permanenterregten Synchronmaschine gemäß der Erfindung in einer dritten Ausführungsform.

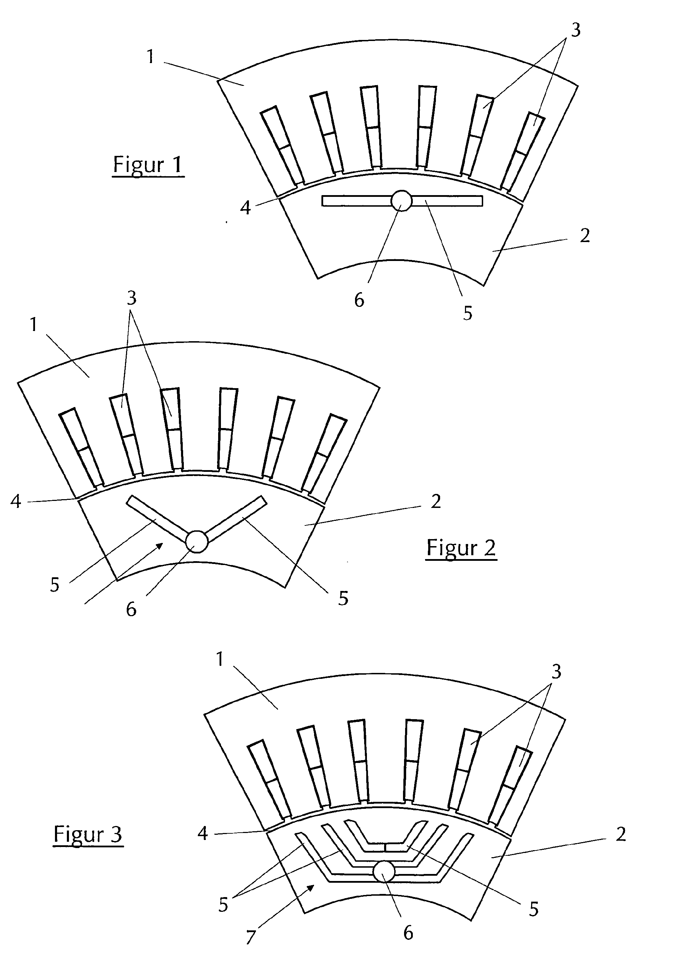

In Figur 1 ist ein Ausschnitt aus einer permanenterregten Synchronmaschine dargestellt, in welchem ein Abschnitt des Stators 1 und ein Abschnitt des Rotors 2 zu erkennen sind. Der Stator 1 ist dabei als weichmagnetischer Stator 1 ausgebildet, der mit entsprechenden Wicklungsanordnungen 3 zur Erzeugung des Statorstrombelags ausgebildet ist. Die in geeigneten Nuten angeordneten Wicklungen sind dabei typischerweise als Mehrphasenwicklungen bzw. Drehstromwicklungen ausgebildet. Durch einen Luftspalt 4 vom Stator 1 getrennt, findet sich der Rotor 2, welcher innerhalb einer weichmagnetischen Struktur Permanentmagnete 5 aufweist, von denen in dem hier dargestellten Ausschnitt nur einer zu erkennen ist. Die Permanentmagnete 5 sind hier als sogenannte vergrabene Permanentmagnete ausgebildet, dies bedeutet, dass zwischen dem Permanentmagnet 5 und dem Luftspalt 4 weichmagnetisches Material des Rotors 2 angeordnet ist, so dass außer dem innen liegenden Rückschluss auch zum Luftspalt 4 hin eine weichmagnetische Überdeckung der Permanentmagneten 5 vorhanden ist. Die Überdeckung ist dabei durchgehend ausgeführt, sodass keine Nuten oder Schlitze im Bereich des Rotors zwischen den einzelnen Permanentmagneten 5 in radialer Richtung von der Rotationsachse des Rotors aus vorhanden sind.

Zusätzlich zu dem Permanentmagnet 5 ist nun außerdem ein bewegliches Element 6 bzw. ein beweglicher Magnet 6 vorhanden. Der bewegliche Magnet 6 ist hier vorzugsweise rund ausgebildet und weist eine vorzugsweise quer zur Zylinderachse verlaufende zweipolige Magnetisierung auf. Durch die runde Form lässt sich eine Verdrehung leichter realisieren. Grundsätzlich sind jedoch auch andere Formen denkbar, ebenso wie eine Anordnung am Rande des Permanentmagneten 5 und nicht, wie in dem hier dargestellten Ausführungsbeispiel, zentral.

Der bewegliche Magnet 6 wirkt nun magnetisch mit dem Permanentmagneten 5 zusammen. Damit ist es möglich, die Magnetisierung des beweglichen Magneten 6 durch Drehen desselben so wirken zu lassen, dass dies die Feldlinien des Permanentmagneten 5 durch gleichläufige Ausrichtung und Addition entweder verstärkt oder durch gegenläufige Ausrichtung und Subtraktion der Feldstärke entsprechend schwächt. Durch ein einfaches Drehen des beweglichen Magneten 6 kann so dass Erregerfeld in dem Rotor 2 je nach Wunsch und benötigtem Zustand entweder geschwächt oder verstärkt werden. Der bewegliche Magnet 6 muss dabei, wie oben bereits ausgeführt, nicht rund ausgebildet sein. Er könnte beispielsweise aus einem unmagnetischen runden Element bestehen, in welches hartmagnetisches Material, beispielsweise ein rechteckiger Stabmagnet, magnetisches Pulver oder dergleichen eingebracht wird. Der konstruktive Aufwand ist hierfür zwar gegeben, jedoch vergleichsweise klein, da die beweglichen Elemente 6 nur gegen kleine magnetische Kräfte verstellt werden müssen.

Insbesondere ist es von Vorteil, wenn alle beweglichen Elemente 6 des Rotors 2 über eine geeignete Vorrichtung miteinander kombiniert werden, so dass ein einziger Aktuator ausreicht, um die gewünschte Einstellung der magnetischen Eigenschaften des Rotors zu realisieren. Ein besonderer Vorteil ist dabei auch die Struktur des Rotors mit den vergrabenen Magneten. Da aufgrund des weichmagnetischen Materials zwischen den Magneten 5, 6 und dem Luftspalt 4 ein Rückschluss für die feldschwächenden bzw. die feldverstärkenden Wirkungen vorhanden ist.

In Figur 2 ist ein alternatives Ausführungsbeispiel dargestellt, bei welchem dieselben Teile jeweils mit den selben Bezugszeichen versehen sind. Der Unterschied zum Beispiel nach Figur 1 ist der, dass die vergrabenen Permanentmagnete 5 nicht fluchtend verlaufen. Stattdessen sind benachbarte Permanentmagnete 5 in einer V-förmigen Anordnung ausgebildet und zu einer Gruppe7 von Permanentmagneten 5 zusammengefasst. Diese Anordnung mit einem von Null verschiedenen Winkel zwischen den benachbarten Permanentmagneten 5 erlaubt eine gezielte Beeinflussung der Flussdichte in den Luftspalt 4 aufgrund der unterschiedlichen Dicken des Material unter dem die einzelnen Bereiche der Permanentmagnete 5 vergraben sein. Die bevorzugte Anordnung der Permanentmagnete 5 in V-Form ist dabei so gewählt, dass die Spitze des Vs in Richtung der Rotationsachse des Rotors weist. Der bewegliche Magnet 6 sitzt dann in der Spitze der V-förmigen Anordnung. Entsprechende Anordnungen in U-Form oder Ähnliches sind selbstverständlich ebenso denkbar.

Zusätzlich weist hier die Gruppe 7 der Permanentmagnete 5 eines der beweglichen Elemente 6 auf. Somit ergibt sich auch hier dieselbe Wirkungsweise wie beim Ausführungsbeispiel gemäß Figur 1, also die Möglichkeit durch Drehung des Elements 6 das Feld der Permanentmagnete 5 in der Gruppe 7 entsprechend zu verstärken oder zu schwächen.

Figur 3 zeigt ein weiteres alternatives Ausführungsbeispiel, bei welchem die selben Teile ebenfalls mit den selben Bezugszeichen versehen sind. Der Unterschied zu den Beispielen nach Figur 1 und Figur 2 ist wiederum die Anordnung der Permanentmagnete 5. Diese sind als Gruppe 7 in mehreren verschiedenen radialen Ebenen des Rotors 2 angeordnet. Auch dies ist eine an sich bekannte Art der Anordnung, die die Möglichkeit bietet Flussdichten und Rückschlussbereiche konstruktiv so zu gestalten, dass sich eine Beeinflussung der Flussdichte im Luftspalt 4 ergibt.

Zusätzlich weist auch hier die Gruppe 7 der Permanentmagnete 5 eines der beweglichen Elemente 6 auf. Somit ergibt sich wiederum dieselbe Wirkungsweise wie beim Ausführungsbeispiel gemäß den Figuren 1 und 2.

## Patentansprüche

1. Permanenterregte Synchronmaschine mit einem Rotor und einem Stator, wobei der Stator Wicklungen aufweist, und wobei der Rotor vergrabene Permanentmagnete aufweist,
**dadurch gekennzeichnet, dass** im Bereich der Permanentmagnete (5) mit diesen korrespondierende Elemente (6) angeordnet sind, welche hartmagnetisches Material mit einer Magnetisierung aufweisen, und welche um eine Achse senkrecht zu ihrer Magnetisierungsrichtung beweglich ausgebildet sind.

2. Permanenterregte Synchronmaschine nach Anspruch 1,
**dadurch gekennzeichnet, dass** die Elemente (6) rund und um ihre eigne Achse drehbeweglich ausgebildet sind.

3. Permanenterregte Synchronmaschine nach Anspruch 1 oder 2,
**dadurch gekennzeichnet, dass** jeder der Permanentmagnete (5) mit wenigstens einem der Elemente zusammenwirkt.

4. Permanenterregte Synchronmaschine nach Anspruch 1 oder 2,
**dadurch gekennzeichnet, dass** die Permanentmagnete (5) in Gruppen (7) zusammengefasst sind, wobei jede der Gruppen (7) an Permanentmagneten (5) wenigstens eines der Elemente (6) aufweist.

5. Permanenterregte Synchronmaschine nach einem der Ansprüche 1 bis 4,
**dadurch gekennzeichnet, dass** die Elemente (6) zentral jeweils im Bereich des Permanentmagneten (5) oder der Gruppe (7) von Permanentmagneten (5) angeordnet sind.

6. Permanenterregte Synchronmaschine nach Anspruch 4 oder 5,
**dadurch gekennzeichnet, dass** jeweils zwei der Permanentmagnete (5) als Gruppe zusammengefasst sind, wobei zentral zwischen den beiden Permanentmagneten (5) jeweils eines der Elemente (6) angeordnet ist.

7. Permanenterregte Synchronmaschine nach einem der Ansprüche 1 bis 6,
**dadurch gekennzeichnet, dass** die Elemente (6) im Rotor (2) alle mit einer Vorrichtung verbunden sind, so dass die Elemente (6) durch einen Aktuator gemeinsam drehbar sind.

8. Permanenterregte Synchronmaschine nach einem der Ansprüche 1 bis 7,
**dadurch gekennzeichnet, dass** benachbarte Permanentmagnete (5) in einem von Null verschiedenen Winkel zueinander angeordnet sind.

9. Permanenterregte Synchronmaschine nach einem der Ansprüche 1 bis 8,
**dadurch gekennzeichnet, dass** die Permanentmagnete (5) in mehreren verschiedenen radialen Ebenen des Rotors (2) angeordnet sind.

10. Permanenterregte Synchronmaschine nach einem der Ansprüche 1 bis 9,
**dadurch gekennzeichnet, dass** die Elemente (6) als Permanentmagnete ausgebildet sind.

11. Verwendung einer permanenterregten Synchronmaschine nach einem der Ansprüche 1 bis 10, einem Fahrzeug, insbesondere einem schienenlosen Fahrzeug.

12. Verwendung nach Anspruch 11,
**dadurch gekennzeichnet, dass** die permanenterregte Synchronmaschine Teil eines Antriebsstranges, insbesondere eines Hybridantriebsstranges ist.
